# EUROPÄISCHE PATENTSCHRIFT

(11) **EP 2 234 327 B1**
(45) Veröffentlichungstag und Bekanntmachung des Hinweises auf die Patenterteilung: **30.05.2018**
(21) Anmeldenummer: 10156506.7
(22) Anmeldetag: 15.03.2010
(51) Int. Cl.: H04L 29/08, H04W 48/08

(54) **VERFAHREN UND NETZWERKKNOTEN ZUM FREISCHALTEN EINER DATENVERBINDUNG**
METHOD AND NETWORK NODES FOR APPROVING A DATA CONNECTION
PROCÉDÉ ET NOEUDS DE RÉSEAU DESTINÉS À L'ADMISSION D'UNE CONNEXION DE DONNÉES

(30) Priorität: 23.03.2009 DE 102009014030
(43) Veröffentlichungstag der Anmeldung: 29.09.2010
(73) Patentinhaber: Vodafone Holding GmbH, 40213 Düsseldorf (DE)
(72) Erfinder: Grosche, Uwe, 41462, Neuss (DE)
(74) Vertreter: Jostarndt Patentanwalts-AG

(56) Entgegenhaltungen:
- EP-A1- 2 110 983
- WO-A1-03/015353
- WO-A1-2009/027853
- Roamware: "Roaming Service Controller" 2008, XP002585669 Gefunden im Internet: URL:http://www.roamware.com/downloads/data sheets/Roaming%20Service%20Controller.pdf> [gefunden am 2010-06-01]

## Beschreibung

### Technisches Gebiet

Die Erfindung bezieht sich auf den Aufbau von Datenverbindungen über ein Mobilfunknetzwerk in ein Datennetzwerk. Insbesondere betrifft die Erfindung ein Verfahren und einen Netzwerkknoten zum Freischalten einer Datenverbindung von einem mobilen Endgerät über wenigstens ein Mobilfunknetzwerk in ein Datennetzwerk, wobei dem Endgerät ein Heimatnetzwerk zugeordnet ist.

### Hintergrund der Erfindung

In Mobilfunknetzwerken sind Datendienste bekannt, die es ermöglichen eine paketvermittelnde Datenverbindung zwischen einem Endgerät, das mit einem Mobilfunknetzwerk verbunden ist und einem mit dem Mobilfunknetzwerk gekoppelten Datennetzwerk, wie beispielsweise dem Internet, herzustellen. Beispiele für derartige Dienste sind GPRS (General Radio Packet Service), EGPRS (Enhanced GPRS), Paketdatenübertragung im UMTS (Universal Mobile Telecommunications System) und HSDPA (High Speed Downlink Packet Access) bzw. HSPA (High Speed Packet Access).

Zunehmend sind Datendienste der zuvor genannten Art auch beim sogenannten Roaming nutzbar, d.h. wenn sich ein Teilnehmer nicht in sein Heimatnetzwerk einbucht, sondern in ein anderes, sogenanntes besuchtes Netzwerk. Um dem Teilnehmer dabei bestehende Dienste des Heimatnetzwerks verfügbar machen zu können, kann der Zugriff auf Datennetzwerke beim Roaming als ein sogenannter Home Access konfiguriert sein. Dies bedeutet, dass der Zugriff auf das Datennetzwerk über das Heimatnetzwerk des Teilnehmers vorgenommen wird. Hierzu wird eine Datenverbindung von einer Vermittlungseinheit des besuchten Mobilfunknetzwerks an das Heimatnetzwerk weitergeleitet, welches die Verbindung zu dem Datennetzwerk herstellt.

Die Bedingungen für einen Zugriff auf den Datendienst, insbesondere die für die Dienstnutzung anfallenden Gebühren, richten sich in der Regel nach dem Mobilfunknetzwerk, von dem aus der Teilnehmer auf den Datendienst zugreift. So fallen bei einem Zugriff auf den Datendienst aus einem besuchten Mobilfunknetzwerk im Ausland in der Regel höhere Gebühren an als bei einem Zugriff aus einem besuchten Mobilfunknetzwerk im Inland oder dem Heimatnetzwerk.

Für den Teilnehmer sind die Bedingungen für die Nutzung des Datendienstes jedoch oftmals nur anhand von Gebührenverzeichnissen seines Mobilfunkanbieters ersichtlich. Dies ist für den Nutzer unkomfortabel, da ihm ein solches Gebührenverzeichnis oftmals nicht zur Verfügung steht und die Interpretation des Verzeichnisses aufgrund von differenzierten Gebührenstrukturen Schwierigkeiten bereitet kann. Für den Mobilfunkanbieter ist damit das Problem verbunden, dass Teilnehmer Datendienste häufig nicht nutzen, weil sie hohe Gebühren fürchten.

Aus der nachveröffentlichten EP 2 110 983 A1 geht ein Verfahren zur Bereitstellung eines Roamingdienstes hervor. Bei dem Verfahren wird über einen SGSN (Serving GPRS Support Node) eines besuchten Netzes ein PDP-Kontext zwischen einem Endgerät einem GGSN (Gateway GPRS Support Node) im Heimatnetz aufgebaut. Dann übermittelt der SGSN einen Mobile Country Code MCC und einen Mobile Network Code MNC des besuchten Netzes an den GGSN. Die Informationen werden zur Ermittlung von Preisinformationen herangezogen, die an dem Endgerät angezeigt werden.

Die WO 2009/027853 beschreibt ein Roamingverfahren, bei dem ein Datendienst mit einem "Normaltarif" über das Heimatnetz eines Roamingnutzers oder unabhängig von dem Heimatnetz mit einem Spezialtarif durch das besuchte Netz bereitgestellt werden kann. Wenn ein Spezialtarif verfügbar ist und auf einer Webseite vom Nutzer ausgewählt worden ist, werden von dem besuchten Netz Tarifdetails bereitgestellt, und der Nutzer kann den Spezialtarif buchen. Wenn der Nutzer den Normaltarif wählt oder nur der Normaltarif verfügbar ist, dann wird der Nutzer mit einer Meldung ("normal tariff notice") über die Verwendung des Normaltarifs informiert.

Die WO 03/015353 A1 offenbart ein Verfahren, bei dem in einem SGSN eine Liste hinterlegt wird, in der angegeben wird, über welche GGSNs bzw. Anbieter eine Datenverbindung in ein Datennetz aufgebaut werden kann. Anhand dieser Liste wird ein geeigneter SGSN ausgewählt. Zusätzlich kann in den GGSNs eine Liste hinterlegt sein, in der die SGSNs angegeben sind, die den Aufbau einer Datenverbindung anfordern dürfen.

### Darstellung der Erfindung

Es ist eine Aufgabe der vorliegenden Erfindung, die Nutzung eines Datendienstes zum Zugriff auf ein Datennetzwerk über ein Mobilfunknetzwerk für einen Mobilfunkteilnehmer zu vereinfachen. Insbesondere soll dabei eine Vereinfachung im Falle eines Roamings des Teilnehmers erzielt werden.

Die Aufgabe wird durch ein Verfahren mit den Merkmalen des Patentanspruchs 1 und durch einen Netzwerkknoten mit den Merkmalen des Patentanspruchs 13 gelöst. Ausführungsformen des Verfahrens und des Netzwerkknotens sind in den abhängigen Ansprüchen angegeben.

Gemäß einem ersten Aspekt der Erfindung wird ein Verfahren der eingangs genannten Art vorgeschlagen, bei dem eine Anforderung der Datenverbindung in einer ersten Vermittlungseinheit des Mobilfunknetzwerks empfangen wird und die Anforderung von der Vermittlungseinheit an eine Gatewayeinrichtung des Heimatnetzwerks weitergeleitet wird. In der Gatewayeinrichtung werden Freischaltungsbedingungen für eine Freischaltung der Datenverbindung auf Grundlage einer Zuordnung zwischen einem der Vermittlungseinheit zugeordneten Merkmal und dem Mobilfunknetz bestimmt, und die Freischaltungsbedingungen werden zur Anzeige an dem mobilen Endgerät bereitgestellt.

Gemäß einem weiteren Aspekt der Erfindung wird ein Netzwerkknoten der eingangs genannten Art bereitgestellt, der eine Schnittstelle umfasst, die dazu ausgestaltet ist, eine Anforderung der Datenverbindung von einer Vermittlungseinheit des Mobilfunknetzwerks zu empfangen. Ferner umfasst der Netzwerkknoten eine Einrichtung, die dazu ausgestaltet ist, Freischaltungsbedingungen für ein Freischalten der Datenverbindung in Abhängigkeit von einem der Vermittlungseinheit zugeordneten Merkmal zu bestimmen, und eine Servereinrichtung, die dazu ausgestaltet ist, die Freischaltungsbedingungen zur Anzeige an dem mobilen Endgerät bereitzustellen.

Darüber hinaus wird ein Netzwerksystem vorgeschlagen, das einen Netzwerkknoten der hierin beschriebenen Art und eine Vermittlungseinheit in einem Mobilfunknetzwerk aufweist, wobei die Vermittlungseinheit dazu ausgestaltet ist, die Anforderungen für den Datenverbindungsaufbau von dem Endgerät entgegenzunehmen und an den Netzwerkknoten weiterzuleiten.

Ein Vorteil der Erfindung besteht darin, dass Freischaltungsbedingungen für ein Freischalten der Datenverbindung in das Datennetzwerk in einfacher Weise in Abhängigkeit von einem Merkmal ermittelt werden, welches der Vermittlungseinheit des Mobilfunknetzwerks zugeordnet ist, mit dem das Endgerät verbunden ist. Anhand eines solchen Merkmals kann insbesondere das Mobilfunknetzwerk bestimmt werden, mit dem das Endgerät verbunden ist und das, wie zuvor beschrieben, Einfluss auf die Freischaltungsbedingungen hat.

Vorteilhaft ist ferner vorgesehen, die ermittelten Freischaltungsbedingungen zur Anzeige an dem Mobilfunkgerät bereitzustellen, so dass der Nutzer insbesondere über die Bedingungen zur Nutzung einer Datenverbindung in das Datennetzwerk informiert wird. Die Notwendigkeit, sich anhand anderer Quellen über die Freischaltungsbedingungen zu informieren, entfällt damit für den Teilnehmer.

In einer Ausgestaltung des Verfahrens und des Netzwerkknotens ist vorgesehen, dass dem Endgerät aufgrund der Weiterleitung der Anforderung an die Gatewayeinrichtung eine IP-Adresse zugeordnet wird und die Freischaltungsbedingungen unter Verwendung der IP-Adresse an das Endgerät übermittelt werden (IP: Internet Protocol). Insbesondere kann es vorgesehen sein, dass aufgrund der Weiterleitung der Anforderung bereits ein so genannter PDP-Kontext für das Endgerät aktiviert wird (PDP: Packet Data Protocol). Nach Zuordnung der IP-Adresse zu dem Endgerät bzw. nach Aktivierung des PDP-Kontexts können paketvermittelnde IP-Datenverbindungen zu dem Endgerät aufgebaut werden. Eine solche Datenverbindung wird vorteilhaft genutzt, um die Freischaltungsbedingungen an das Endgerät zu übermitteln. Hierdurch wird die Übermittlung der Freischaltungsbedingungen vereinfacht.

Eine weitere Ausgestaltung des Verfahrens und des Netzwerkknotens beinhaltet, dass die Anforderungen über eine weitere Vermittlungseinheit des dem Endgerät zugeordneten Heimatnetzwerks an die Gatewayeinrichtung weitergeleitet wird, wobei die weitere Vermittlungseinheit dem Endgerät die IP-Adresse zuordnet. Die erste Vermittlungseinheit, welche die Anforderung für den Datenverbindungsaufbau empfängt, kann sich entweder in dem Heimatnetzwerk des Endgeräts befinden oder in einem weiteren besuchten Mobilfunknetzwerk. Die Zuordnung der IP-Adresse bzw. die aktivierten des PDP-Kontexts wird jedoch in dieser Ausgestaltung vorteilhaft von einer Vermittlungseinheit in Heimatnetzwerk des Endgeräts vorgenommen. Dies entspricht der so genannten Home-Access-Konfiguration, bei der die Datenverbindung in das Datennetzwerk über das Heimatnetzwerk eines Endgeräts aufgebaut wird. Die weitere Vermittlungseinheit, die dem Endgerät die IP-Adresse zuordnet, kann insbesondere als ein GGSN (Gateway GPRS Support Node) ausgestaltet sein. Bei der ersten Vermittlungseinheit kann es sich insbesondere um einen SGSN (Serving GPRS Support Node) handeln.

Um die Freischaltungsbedingungen zur Anzeige an dem mobilen Endgerät bereitzustellen, kann es vorgesehen sein, dass die Anforderung zu einem Portalserver umgeleitet wird, wobei der Portalserver eine die Freischaltungsbedingungen enthaltende Webseite an das Endgerät übermittelt. Vorteilhaft können die Freischaltungsbedingungen anhand einer solchen Webseite dem Endgerät in besonders einfacher Weise über die bestehende IP-Verbindung zugeleitet werden.

Der Begriff "Freischaltungsbedingungen" ist im Rahmen der Erfindung in seiner weitesten Bedeutung zu verstehen und umfasst alle Gegebenheiten, die mit der Freischaltung der Datenverbindung in Zusammenhang stehen. Dabei können sich die Freischaltungsbedingungen auch auf die Unmöglichkeit einer Freischaltung beziehen, wenn das Endgerät beispielsweise mit einem Mobilfunknetzwerk verbunden ist, aus dem Datenverbindungen in das Datennetzwerk nicht oder auf andere Weise freigeschaltet werden.

Eine Weiterbildung des Verfahrens und des Netzwerkknotens ist dadurch gekennzeichnet, dass die Freischaltungsbedingungen wenigstens eine Freischaltungsdauer und/oder eine Freischaltungsgebühr umfassen. Die Freischaltungsdauer entspricht einer Zeitdauer, während der die Datenverbindung in das Datennetzwerk freigeschaltet werden kann. Die Freischaltungsgebühr umfasst die hierfür erforderliche Gebühr, die in der Regel an den Betreiber des Heimatnetzwerks zu entrichten ist. Es können auch mehrere wählbare Freischaltungsdauern vorgesehen sein, denen jeweils eine Freischaltungsgebühr zugeordnet ist. Hierdurch kann der Nutzer die Freischaltungsdauer entsprechend seinen Bedürfnissen flexibel wählen.

Die Freischaltung der Datenverbindung erfolgt bei einer Ausgestaltung des Verfahrens und des Netzwerkknotens aufgrund einer mittels des Endgeräts vorgenommenen Bestätigung einer Freischaltungsdauer und/oder einer Freischaltungsgebühr. Damit wird die Freischaltung erst dann vorgenommen, wenn sie von dem Nutzer des Endgeräts bestätigt worden ist. Sofern mehrere wählbare Freischaltungsdauern vorgesehen sind, umfasst die Bestätigung einer Freischaltungsdauer auch die Auswahl einer Freischaltungsdauer. Falls die Freischaltungsbedingungen anhand einer Webseite an dem Gerät bereitgestellt werden, kann eine interaktive Webseite, insbesondere eine als Formular ausgestaltete Webseite, vorgesehen sein, über welche die Bestätigung bzw. Auswahl der Freischaltungsdauer vorgenommen werden kann.

Eine Ausgestaltung des Verfahrens und des Netzwerkknotens umfasst, dass die Datenverbindung von der Gatewayeinrichtung aufgrund der Bestätigung der Freischaltungsdauer für eine der Freischaltungsdauer entsprechende Zeitdauer freigeschaltet wird.

Vorzugsweise wird das Endgerät aufgrund der Freischaltung in der Gatewayeinrichtung derart registriert, dass von dem Endgerät abgesendete Datenpakete in das Datennetzwerk weitergeleitet werden. Datenpakete, die von Endgeräten abgesendet werden, die nicht derart registriert sind, werden von der Gatewayeinrichtung hingegen nicht in das Datennetzwerk weitergeleitet. Die Registrierung kann insbesondere anhand eines Identifikationsmerkmals des Endgeräts erfolgen, das in den Datenpaketen enthalten ist, die von dem Endgerät abgesendet werden, oder in anderer Weise zusammen mit dem Datenpaket an die Gatewayeinrichtung übermittelt werden.

Wie zuvor erwähnt, richten sich die Freischaltungsbedingungen vorzugsweise nach dem Mobilfunknetzwerk, mit dem das Endgerät direkt verbunden ist, bei dem es sich beispielsweise um das Heimatnetzwerk oder ein besuchtes Netzwerk handeln kann. Das Verfahren und der Netzwerknoten sind daher derart ausgestaltet, dass die Freischaltungsbedingungen auf der Grundlage einer Zuordnung zwischen dem Merkmal der Vermittlungseinheit und einem Mobilfunknetzwerk bestimmt wird. Vorteilhaft wird in dieser Weiterbildung das Merkmal der Vermittlungseinheit zumindest mittelbar dazu benutzt, die Vermittlungseinheit einem Mobilfunknetzwerk zuzuordnen. Hierdurch ist eine besonders einfache Bestimmung des Mobilfunknetzwerks möglich, mit dem das Endgerät verbunden ist.

Vorzugsweise umfasst das der Vermittlungseinheit zugeordnete Merkmal eine IP-Adresse der Vermittlungseinheit. Vorteilhaft ist die IP-Adresse der Vermittlungseinheit bereits in den Datenpaketen enthalten, die von der Vermittlungseinheit weitergeleitet werden, so dass mit der IP-Adresse ein Merkmal der Vermittlungseinheit gewählt ist, das ohne weitere Modifikationen, insbesondere ohne eine Modifikation der Vermittlungseinheit, über die IP-Verbindung zu der Gatewayeinrichtung gelangt. Hierdurch wird die Bestimmung der Freischaltungsbedingungen bzw. des Netzwerks, mit dem das Endgerät verbunden ist, vereinfacht.

Bei dem weiteren Datennetzwerk handelt es sich in einer Ausgestaltung des Verfahrens und des Netzwerkknotens um das Internet. Bei dem Mobilfunknetzwerk kann es sich, wie zuvor bereits erwähnt, um das dem mobilen Endgerät zugeordnete Heimatnetzwerk handeln oder um ein besuchtes Netzwerk, welches mit dem Heimatnetzwerk verbunden ist.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Darstellung eines Netzwerksystems mit zwei Mobilfunknetzwerken, und
- Fig. 2: eine schematische Darstellung eines Verwaltungs- und Steuersystems in einem der Mobilfunknetzwerke.

### Darstellung von Ausführungsbeispielen

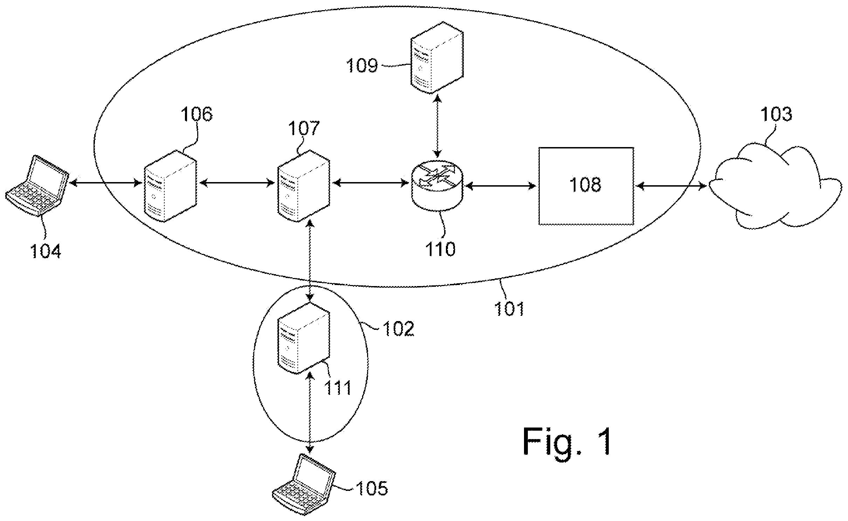

Figur 1 zeigt in einer schematischen Darstellung ausgewählte Komponenten eines Netzwerksystems mit einem ersten Mobilfunknetzwerk 101 und einem zweiten Mobilfunknetzwerk 102. Die gezeigten Komponenten werden verwendet, um einen paketvermittelnden Datendienst bereitzustellen, der es Mobilfunkteilnehmern ermöglicht, über das erste Mobilfunknetzwerk 101 und/oder das zweite Mobilfunknetzwerk 102 paketvermittelnde Datenverbindungen zu einem Datennetzwerk 103 aufzubauen, das mit dem ersten Mobilfunknetzwerk 101 verbunden ist. Bei dem Datennetzwerk 103 kann es sich beispielsweise um das Internet oder ein weiteres öffentliches oder privates Datennetzwerk 103 handeln.

Innerhalb der anhand des Datendienstes aufgebauten Datenverbindung können Datenpakete zwischen einem Endgerät 104, 105, das mit einem Mobilfunknetzwerk 101, 102 verbunden ist, und einem in der Figur nicht dargestellten Server des Datennetzwerks 103 ausgetauscht werden. Der Datenaustausch zwischen dem Endgerät 104, 105 und dem Server basiert vorzugsweise auf dem Internet Protocol (IP). Bei dem Datendienst kann es sich beispielsweise um einen GPRS oder EGPRS handeln, falls die Mobilfunknetzwerke 101, 102 als GSM- bzw. EDGE-Netzwerke ausgestaltet sind (GSM: Global System for Mobile Communications; EDGE: Enhanced Data Rates for GSM Evolution). Sofern die Mobilfunknetzwerke 101, 102 als UMTS-Netzwerke ausgestaltet sind, kann der Datendienst auch als UMTS-Paketdatendienst oder HSDPA bzw. HSPA ausgestaltet sein (UMTS: Universal Mobile Telecommunications System). Gleichfalls kann es sich bei den Mobilfunknetzwerken 101, 102 auch um SAE/LTE-Netzwerke handeln, in denen entsprechende Paketdatendienste bereitgestellt werden (SAE: System Architecture Evolution, LTE: Long Term Evolution).

Mobile Endgeräte 104, 105 werden mit den Mobilfunknetzwerken 101, 102 drahtlos über ein in der Figur nicht dargestelltes funkbasiertes Zugangsnetzwerk verbunden. Die Endgeräte 104, 105 können beispielsweise als Mobiltelefon, PDA (Personal Data Assistent), Notebook-Computer oder dergleichen ausgestaltet sein. In der Figur sind beispielhaft zwei Endgeräte 104, 105 dargestellt, denen jeweils das erste Mobilfunknetzwerk 101 als Heimatnetzwerk (HPLMN) zugeordnet ist. Dies bedeutet, dass die Endgeräte 104, 105 in dem HPLMN 101 registriert sind und die Nutzer der Endgeräte 104, 105 in dem HPLMN 101 als eigene Teilnehmer geführt werden. Dies geschieht üblicherweise aufgrund eines Vertrages zwischen den Teilnehmern und einem Mobilfunkanbieter, der das HPLMN 101 betreibt. Die Registrierung der Endgeräte 104, 105 erfolgt insbesondere unter einer den Endgeräten 104, 105 eindeutig zugeordneten Identifikationskennung, die als IMSI (International Mobile Subscriber Identity) ausgestaltet sein kann, sowie einer der Identifikationskennung zugeordneten MSISDN (Mobile Subscriber Integrated Services Digital Network Number), die auch als Rufnummer eines Endgeräts 104, 105 dient. Innerhalb der Endgeräte 104, 105 sind Identifikationsdaten in einem Teilnehmeridentifizierungsmodul hinterlegt, das verwendet wird, um die Endgeräte 104, 105 an einem Mobilfunknetzwerk 101, 102 anzumelden. Die Teilnehmeridentifizierungsmodule sind üblicherweise als eine Chipkarte ausgeführt bzw. in einer Chipkarte enthalten, die in das entsprechende Endgerät 104, 105 eingesetzt wird. Im Zusammenhang mit GSM-Netzwerken sind die Teilnehmeridentifizierungsmodule beispielsweise als SIM ausgestaltet und im Zusammenhang mit UMTS-Netzwerken als USIM (SIM: Subscriber Identification Module; USIM: Universal Subscriber Identification Module).

Eines der Endgeräte 104, 105 ist in der beispielhaft in Figur 1 gezeigten Situation direkt mit dem HPLMN 101 verbunden. Um eine paketvermittelnde Datenverbindung aufzubauen, übermittelt das Endgerät 104 eine entsprechende Anforderung an das HPLMN 101. Bei der Anforderung kann es sich bereits um eine Anforderung für den Datenverbindungsaufbau zu einem Server des Datennetzwerks 103 handeln, der in der Anforderung anhand seiner IP-Adresse oder einen der IP-Adresse zuordenbaren URL (Uniform Ressource Locator) identifiziert wird. Insbesondere kann es sich beispielsweise um eine Anforderung zur Bereitstellung einer Webseite oder eine Anforderung zur Übermittlung von Nachrichten, wie beispielsweise auf einem Server befindliche E-Mails, handeln. Eine speziell ausgestaltete Anforderung zum Freischalten einer Datenverbindung in das Datennetzwerk 103 ist nicht erforderlich.

In dem HPLMN 101 wird die Anforderung des Endgeräts 104 in einer Eingangsvermittlungseinheit 106 empfangen, in deren Versorgungsbereich sich das Endgerät 104 befindet. Die Eingangsvermittlungseinheit 106, die vorzugsweise als SGSN (Serving GPRS Support Node) ausgeführt ist, ist insbesondere dafür zuständig, von dem Endgerät 104 erhaltene Daten in einer an sich bekannten Weise an nachfolgende Netzwerkknoten weiterzuleiten und umgekehrt.

Aufgrund des Empfangs der Anforderung in der Eingangsvermittlungseinheit 106 wird dem Endgerät 104 zunächst eine IP-Adresse zugeordnet, die herangezogen wird, um IP-Datenpakete an das Endgerät 104 adressieren zu können. Die IP-Adresse wird vorzugweise von einer weiteren Vermittlungseinheit 107 angefordert, die als ein GGSN (Gateway GPRS Support Node) ausgestaltet ist. Im Allgemeinen enthält ein Mobilfunknetzwerk eine Mehrzahl weiterer Vermittlungseinheiten 107. Die Auswahl der Vermittlungseinheit 107 für die Bearbeitung der Anforderung des Endgeräts 104 erfolgt in einem solchen Fall aufgrund einer entsprechenden Adressierung, die durch das Endgerät 104 vorgenommen wird. Für die Adressierung kann dabei ein der Vermittlungseinheit 107 zugeordneter, sogenannter APN (Access Point Name) verwendet werden, der in dem Endgerät 104 hinterlegt ist.

Die Vermittlungseinheit 107 nimmt die Zuordnung der IP-Adresse zu dem Endgerät 104 im Rahmen einer so genannten PDP-Kontext-Aktivierung vor, die zur Erzeugung eines PDP-Kontexts für das Endgerät 104 führt, welcher einer logischen IP-basierten Verbindung zu dem Endgerät 104 entspricht. Im Rahmen des PDP-Kontextes erfolgt eine Adressierung von an das Endgerät 104 gerichteten Datenpaketen jedoch üblicherweise nicht direkt an die IP-Adresse des Endgeräts 104, sondern an die IP-Adresse der ersten Eingangsvermittlungseinheit 106, welche die Datenpakete an das Endgerät 104 weiterleitet. Hierzu können die Datenpakete beispielsweise in so genannte GTP-Pakete integriert werden, die zwischen der Eingangsvermittlungseinheit 106 und einer Gegenstelle im HPLMN 101 oder im Datennetzwerk 103 ausgetauscht werden (GTP: GPRS Tunnel Protocol). Bereits insoweit sind von dem Endgerät 104 abgesendete Datenpakete mit der IP-Adresse der Eingangsvermittlungseinheit 106 verknüpft, um die Antwortadresse anzugeben, nachdem die Datenpakete von dieser weitergeleitet worden sind.

Nach der Aktivierung des PDP-Kontextes für das Endgerät 104 wird die IP-Adresse des Endgeräts 104 an die Eingangsvermittlungseinheit 106 gemeldet und die Anforderung für den Datenverbindungsaufbau wird von der Eingangsvermittlungseinheit 106 an die weitere Vermittlungseinheit 107 über eine IP-basierte Verbindung übermittelt. Die weitere Vermittlungseinheit 107 ist so konfiguriert, dass erhaltene Datenpakete, insbesondere Anforderungen von Endgeräten 104, die anhand dem der Vermittlungseinheit 107 zugeordneten APN adressiert sind, an eine Gatewayeinrichtung 108 des HPLMN 101 weitergeleitet werden. Dies kann beispielsweise durch eine feste Weiterleitungsvorschrift in der Vermittlungseinheit 107 erreicht werden. Darüber hinaus kann es innerhalb des HPLMN 101 auch vorgesehen sein, dass anhand anderer APN Anforderungen auch auf andere Weise in das Datennetzwerk 103 weitergeleitet werden. Derartige Anforderungen werden in einer Ausgestaltung von einer anderen Vermittlungseinheit, insbesondere einem anderen GGSN, bearbeitet.

Ausgenommen von einer Weiterleitung an die Gatewayeinrichtung 108 sind allerdings solche Datenpakete, die an vorgegebene Servereinrichtungen des HPLMN 101 adressiert sind, die bestimmte Dienste des HPMLN 101 bereitstellen. Ein Beispiel für eine solche Servereinrichtung ist ein MMSC 109 zum Versenden von Multimedianachrichten (MMSC: Multimedia Messaging Service Centre). An solche Servereinrichtungen 109 adressierte Datenpakete werden in einem Router 110 anhand ihrer Adressierung erkannt und der entsprechenden Servereinrichtung zugeleitet. Die übrigen Datenpakete werden von dem Router 110 zu der Gatewayeinrichtung 108 weitergeleitet.

Das in der Figur 1 dargestellte Endgerät 105 ist nicht mit dem HPLMN 101 verbunden, sondern mit einem besuchten Mobilfunknetzwerk (VPLMN) 102, das mit dem HPLMN 101 gekoppelt ist. Anforderungen für einen Datenverbindungsaufbau des Endgeräts 105 werden in einer Eingangsvermittlungseinheit 111 des VPLMN 102 empfangen, die vorzugsweise ebenfalls als SGSN ausgestaltet ist. Aufgrund des von dem Endgerät 105 mitgeteilten APN fordert die Eingangsvermittlungseinheit 111 insbesondere eine Zuordnung einer IP-Adresse zu dem Endgerät 105 von der weiteren Vermittlungseinheit (GGSN) 107 des HPLMN 101 an. Vorzugsweise erfolgt die Zuordnung der IP-Adresse zu dem Endgerät 105 in der zuvor bereits beschriebenen Weise im Rahmen einer PDP-Kontext-Aktivierung. Nach Erhalt der IP-Adresse von der Vermittlungseinheit 107 und der Aktivierung des PDP-Kontexts für das Endgerät 105 wird die Anforderung des Endgeräts 105 von der Eingangsvermittlungseinheit 111 des VPLMN 102 an die Vermittlungseinheit 107 des HPLMN 101 gesendet. Diese leitet die Anforderung in der zuvor bereits beschriebenen Weise an die Gatewayeinrichtung 108 weiter. Mittels des Routers 110 werden auch bei einem Zugriff von dem VPLMN 102 aus Datenpakete, die an bestimmte Servereinrichtungen 109 des HPLMN 101 adressiert sind, zu dieser weiter geleitet. Die Verbindung zwischen der Eingangsvermittlungseinheit 111 des VPLMN 102 und der Vermittlungseinheit 107 des HPLMN 101 wird in einer Ausgestaltung über ein in der Figur nicht gezeigtes Backbone-Netzwerk hergestellt, dass beispielsweise als GRX ausgestaltet sein kann (GRX: GPRS Roaming Exchange).

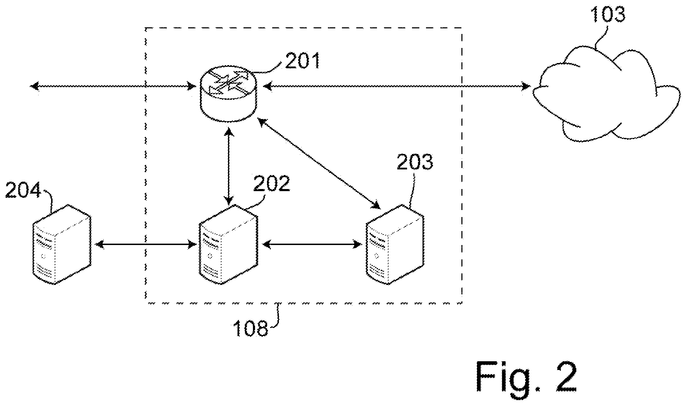

Die Gatewayeinrichtung 108 dient zur Freischaltung von Datenverbindungen in das Datennetzwerk 103 und - nach der Freischaltung einer Datenverbindung - zum Weiterleiten von Datenpaketen, die von einem Endgerät 104, 105 gesendet worden sind, in das Datennetzwerk 103 und umgekehrt. Eine beispielhafte Ausgestaltung der Gatewayeinrichtung 108 ist schematisch in der Figur 2 veranschaulicht. In dieser Ausgestaltung umfasst die Gatewayeinrichtung 108 insbesondere einen Gatewayserver 201 sowie einen Portalserver 202 und eine Verwaltungseinheit (AAA-Server) 203, die jeweils mit dem Gatewayserver 201 verbunden sind und zudem miteinander kommunizieren können.

Die Freischaltung einer Datenverbindung in das Datennetzwerk 103 für ein Endgerät 104, 105 erfolgt vorzugsweise für einen vorgegebenen Zeitraum, der im Folgenden auch als Zeitfenster bezeichnet wird, nachdem ein entsprechendes Zeitguthaben von dem betreffenden Teilnehmer erworben worden ist. Die für das Zeitguthaben zu entrichtenden Gebühren richten sich vorzugsweise insbesondere nach dem Mobilfunknetzwerk 101, 102, von dem aus der Teilnehmer mittels eines Endgeräts 104, 105 auf das Datennetzwerk 103 zugreifen möchte. Weiterhin kann ein Zugriff auf das Datennetzwerk 103 aus vorgegebenen Mobilfunknetzwerken 101, 102 ausgeschlossen werden. Bei derartigen Mobilfunknetzwerken 101, 102, die im Folgenden als verbotene Mobilfunknetzwerke bezeichnet werden, handelt es sich um die Mobilfunknetzwerke 101, 102, aus den Datenverbindungen in das Datennetzwerk 103 nicht oder auf andere Weise freigeschaltet werden.

Ein Mobilfunkanbieter kann zudem den Wunsch haben, Teilnehmern mittels des Paketdatendienstes einen unentgeltlichen Zugriff auf bestimmte Server des Datennetzwerks 103 zu ermöglichen - unabhängig davon, ob die Endgeräte 104, 105 der Teilnehmer direkt mit dem HPLMN 101 verbunden sind oder über ein VPLMN 102 auf den Datendienst zugegriffen wird. Bei den Servern kann es sich beispielsweise um Server des Mobilfunkanbieters handeln, die bestimmte Dienste oder Informationen für die Kunden des Mobilfunkanbieters bereitstellen.

Um einen freien Zugriff auf vorgegebene Server zu ermöglichen, sind die Adressen dieser Server in einer Ausgestaltung in dem Gatewayserver 201 hinterlegt. Wenn der Gatewayserver 201 eine Anforderung eines Endgeräts 104, 105 für einen Datenverbindungsaufbau in das Datennetzwerk 103 empfängt, die eine der hinterlegten Adressen als Zieladresse enthält, dann leitet der Gatewayserver 201 die Anforderung an das Datennetzwerk 103 weiter. Dies geschieht unabhängig davon, ob eine Datenverbindung in das Datennetzwerk 103 für das Endgerät 104, 105 frei geschaltet ist.

Sofern eine Anforderung für einen Datenverbindungsaufbau in dem Gatewayserver 201 empfangen wird, die nicht in der zuvor beschriebenen Weise an das Datennetzwerk 103 weitergeleitet wird und die von einem Endgerät 104, 105 stammt, für das keine Datenverbindung in das Datennetzwerk 103 freigeschaltet ist, leitet der Gatewayserver 201 die empfangene Anforderung an den Portalserver 202 weiter bzw. an den Portalserver 202 um. Aufgrund des Empfangs der Anforderung in dem Portalserver 202 werden in einer Ausgestaltung zunächst die Freischaltungsbedingungen für eine Datenverbindung in das Datennetzwerk 103 ermittelt. Dies geschieht in der dargestellten Ausgestaltung in der Verwaltungseinrichtung 203.

Die Bestimmung der Freischaltungsbedingungen basiert auf einer Zuordnung der Eingangsvermittlungseinheit 106, 111, über welche die Anforderung an die Gatewayeinrichtung 108 weitergeleitet worden ist, zu einem Mobilfunknetzwerk 101, 102. Eine Identifizierung der Eingangsvermittlungseinheit 106, 111 erfolgt dabei vorzugsweise anhand ihrer IP-Adresse, die, wie zuvor beschrieben, auch in der erhaltenen Anforderung enthalten ist. In der Verwaltungseinheit 203 ist daher in einer Ausgestaltung eine Zuordnung zwischen IP-Adressen von Eingangsvermittlungseinheiten 106, 111, von denen Anforderungen für einen Datenverbindungsaufbau an die Gatewayeinrichtung 108 weitergeleitet werden können, und Freischaltungsbedingungen gespeichert. Hierbei handelt es sich um Freischaltungsbedingungen, die in Bezug auf die Mobilfunknetzwerke 101, 102 vorgesehen sind, in denen sich die Eingangsvermittlungseinheiten 106, 111 jeweils befinden.

Innerhalb der Zuordnung können IP-Adressen einzelner Eingangsvermittlungseinheiten 106, 111 angegeben werden. In der Regel werden die IP-Adressen von Vermittlungseinheiten 106, 107, 111 eines bestimmten Mobilfunknetzwerks 101, 102 jedoch einem dem Mobilfunknetzwerk 101, 102 zugeordneten Nummernkreis entnommen. Hierdurch müssen innerhalb der Zuordnung keine einzelnen IP-Adressen von in Frage kommenden Eingangsvermittlungseinheiten 106, 111 angegeben werden, sondern lediglich Nummernkreise, denen die IP-Adresse einer bestimmten Eingangsvermittlungseinheit 106, 111 jeweils zuordenbar ist. Somit müssen nicht alle Eingangsvermittlungseinheiten 106, 111 eines bestimmten Mobilfunknetzwerks 101, 102 bzw. ihre IP-Adressen bekannt sein. Anhand der IP-Adresse wird in dieser Ausgestaltung somit zunächst ein Nummernkreis ermittelt, dem die IP-Adresse angehört. Dann werden die dem Nummernkreis zugeordneten Freischaltungsbedingungen bestimmt.

Die Freischaltungsbedingungen können für jedes Mobilnetzwerk 101, 102 individuell vorgegeben werden. Vorzugsweise sind jedoch vorgegebene Roamingklassen vorgesehen, denen einzelne Mobilfunknetzwerke 101, 102 jeweils zugeordnet werden. Die Roamingklassen umfassen vorzugsweise eine erste Klasse, in der lediglich das HPLMN 101 enthalten ist, da für dieses in der Regel andere Freischaltungsbedingungen gelten als für alle übrigen Mobilfunknetzwerke 102. Eine weitere Roamingklasse umfasst vorzugsweise die verbotenen Mobilfunknetzwerke 101, 102, von denen aus keine Datenverbindung in das Datennetzwerk 103 aufgebaut werden kann. Eine oder mehrere weitere Roamingklassen mit vorgegebenen Freischaltungsbedingungen sind für die übrigen Mobilfunknetzwerke 101, 102 vorgegeben.

Sofern es sich nicht um verbotene Mobilfunknetzwerke 101, 102 handelt, spezifizieren die Freischaltungsbedingungen vorzugsweise vorgegebene Zeitfenster und zugehörige Gebühren. Dabei können für ein Mobilfunknetzwerk 101, 102 bzw. eine Roamingklasse mehrere Zeitfenster und zugehörige Gebühren vorgegebenen werden, aus denen der Teilnehmer wählen kann. In einer Ausgestaltung können beispielsweise Zeitfenster von einigen Minuten oder einigen zehn Minuten, von wenigen Stunden sowie Zeitfenster im Bereich eines Tages vorgesehen sein, denen jeweils eine Nutzungsgebühr zugeordnet ist. Grundsätzlich ist jedoch die Anzahl der Zeitfenster und ihre jeweilige Dauer frei von einem Mobilfunkanbieter bestimmbar.

Die Freischaltungsbedingungen, die für eine in dem Portalserver 202 erhaltene Anforderung für einen Datenverbindungsaufbau maßgeblich sind, ermittelt der Portalserver 202 anhand der in der Anforderung enthaltene IP-Adresse der Eingangsvermittlungseinheit 106, 111, über welche die Anforderung an die Gatewayeinrichtung 108 weitergeleitet worden ist. Diese IP-Adresse wird dann an die Verwaltungseinheit 203 übergeben. Diese bestimmt anhand der zuvor beschriebenen Zuordnung zwischen IP-Adressen und Freischaltungsbedingungen die maßgeblichen Freischaltungsbedingungen und meldet diese an den Portalserver 202 zurück.

Der Portalserver 202 generiert unter Verwendung der erhaltenen Freischaltungsbedingungen eine Webseite, in der die Freischaltungsbedingungen angegeben sind. Falls anhand der IP-Adresse der Eingangsvermittlungseinheit 106, 111 festgestellt worden ist, dass das Endgerät 104, 105, von dem die Anforderung stammt, in ein verbotenes Mobilfunknetzwerk 101, 102 eingebucht ist, dann enthält die Webseite eine entsprechende Information. Die Webseite wird von dem Portalserver 202 als Antwort auf die Anforderung für einen Datenverbindungsaufbau an das Endgerät 104, 105 gesendet, von dem die Anforderung stammt. Die Übermittlung der Webseite erfolgt dabei über die bestehende IP-Verbindung zu dem Endgerät 104, 105 unter Verwendung des zuvor aktivierten PDP-Kontexts.

Die in dem Portalserver 202 erzeugte Webseite wird nach dem Empfang in dem Endgerät 104, 105 mittels einer Anzeigeeinrichtung des Endgeräts 104, 105 und unter Verwendung einer in dem Endgerät 104, 105 enthaltenen Browsereinrichtung angezeigt. Vorzugsweise ist die Webseite nach Art eines Formulars ausgefüllt, das es ermöglicht, Nutzereingaben, die an dem mobilen Endgerät 104, 105 vorgenommen werden, zu empfangen und an den Portalserver 202 zu übermitteln. Auf diese Weise wird dem Nutzer vorzugsweise die Auswahl eines der vorgesehenen Zeitfenster durch eine entsprechende Interaktion mit der Webseite ermöglicht.

Darüber hinaus ist es vorzugsweise vorgesehen, dass der Nutzer über die Webseite eine Zahlungstransaktion bezüglich der Gebühren initiiert, die für den Erwerb des Zeitfensters zu entrichten sind. Die Bezahlung kann grundsätzlich mit jedem dem Fachmann bekannten Zahlungsverfahren durchgeführt werden, beispielsweise durch eine Kreditkartenzahlung oder durch Abbuchung von einem Wertguthaben, das der Teilnehmer bei dem Mobilfunkanbieter besitzt. Gleichfalls kann eine Bezahlung über die Mobilfunkrechnung des Teilnehmers erfolgen. Die gegebenenfalls für die Durchführung des Zahlungsvorgangs erforderlichen Angaben, wie beispielsweise die Kreditkartennummer, können von dem Nutzer auf der Webseite eingegeben werden und werden über die Webseite an den Portalserver 202 übermittelt.

In einer Ausgestaltung kann es auch vorgesehen sein, dass mehrere Zahlungsarten zur Auswahl gestellt werden. Die Auswahl kann dabei auf der Webseite vorgenommen werden und wird über die Webseite an den Portalserver 202 übermittelt. Aufgrund der Auswahl stellt der Portalserver 202 gegebenenfalls eine weitere Webseite an dem Endgerät 104, 105 bereit, die es ermöglicht, die erforderlichen Angaben zur Durchführung des Zahlungsvorgangs einzugeben.

Nachdem die Eingaben, die von dem Teilnehmer auf der Webseite oder den Webseiten vorgenommen worden sind, in dem Portalserver 202 empfangen worden sind, wird vorzugsweise die Zahlung der Gebühr für das ausgewählte Zeitfenster bewirkt. Hierzu werden die für die Zahlung maßgeblichen Angaben einer Zahlungsservereinrichtung 204 übergeben, welcher die Zahlungstransaktion allein oder zusammenwirkend mit weiteren in den Figuren nicht dargestellten Servereinrichtungen durchführt.

Das von dem Teilnehmer ausgewählte Zeitfenster wird von dem Portalserver 202 an die Verwaltungseinrichtung 203 gemeldet. Diese sorgt für die Freischaltung einer Datenverbindung zwischen dem Endgerät 104, 105 und dem Datennetzwerk 103 für eine dem Zeitfenster entsprechende Zeitdauer. Hierzu wird das Endgerät 104, 105 in dem Gatewayserver 201 als freigeschaltetes Gerät 104, 105 registriert. Dies geschieht unter Zuordnung der Zeitdauer der Freischaltung. Vorzugsweise berechnet die Verwaltungseinheit 203 oder der Gatewayserver 201 hierzu den Zeitpunkt, in dem die Zeitdauer abgelaufen sein wird. Dieser Zeitpunkt wird dann der Registrierung des Endgeräts 104, 105 zugeordnet. Nach Ablauf der Zeitdauer, das heißt, wenn der ermittelte Zeitpunkt erreicht ist, wird die Registrierung des Endgeräts 104, 105 in dem Gatewayserver 201 entfernt oder als ungültig markiert.

Die Registrierung des Endgeräts 104, 105 erfolgt unter Verwendung eines Identifikationsmerkmals, das es dem Gatewayserver 201 ermöglicht, empfangene Datenpakete dem Endgerät 104, 105 zuzuordnen. In einer Ausgestaltung handelt es sich bei dem Identifikationsmerkmal um die IP-Adresse, die dem Endgerät 104, 105 zugeordnet wurde und die auch in den Datenpaketen enthalten ist, die von dem Endgerät 104, 105 abgesendet werden bzw. an das Endgerät 104, 105 adressiert sind. Gleichfalls kann jedoch auch ein anderes Identifikationsmerkmal des Endgeräts 104, 105 verwendet werden. Sofern das verwendete Identifikationsmerkmal des Endgeräts 104, 105 veränderlich ist, wie es etwa bei der IP-Adresse aufgrund eines Abmeldens des Endgeräts und ein erneutes Anmelden der Fall sein kann, ist es vorzugsweise vorgesehen, dass Veränderungen des Identifikationsmerkmals an den Gatewayserver 201 gemeldet werden, der gegebenenfalls das ursprünglich gespeicherte Identifikationsmerkmal durch das geänderte Identifikationsmerkmal ersetzt. Alternativ kann es auch vorgesehen sein, dass das Identifikationsmerkmal während innerhalb des Zeitfensters nicht verändert wird. So kann dem Endgerät bei einer erneuten Anmeldung an dem HPLMN 101 bzw. dem VPLMN 102 innerhalb des Zeitfensters dieselbe IP-Adresse zugewiesen wie beim ersten Mal. Hierzu werden das Endgerät und das Zeitfenster vorzugsweise in der Vermittlungseinheit 107 registriert. Innerhalb des Zeitfensters wird die IP-Adresse des Endgeräts 101, 102 in diesem nicht anderweitig vergeben. Nach Ablauf des Zeitfensters ist sie wieder für andere Endgeräte 101, 102 verfügbar.

Nachdem die Registrierung des Endgeräts 104, 105 in dem Gatewayserver 201 erfolgt ist, wird vorzugsweise die zuvor empfangene Anforderung für einen Datenverbindungsaufbau, die die Durchführung des zuvor beschriebenen Freischaltungsvorgangs initiiert hat, von dem Gatewayserver 201 in das Datennetzwerk 103 weitergeleitet. Zu diesem Zweck kann die Anforderung in dem Gatewayserver 201 zwischengespeichert werden, während die Freischaltung der Datenverbindung vorgenommen wird. Damit kann die Freischaltung beispielsweise anhand einer Anforderung zum Anzeigen einer bestimmten Webseite vorgenommen werden, und es wird ermöglicht, dass diese Webseite nach der Freischaltung ohne weitere Nutzeraktionen an dem Endgerät 104, 105 angezeigt wird.

Wenn der Gatewayserver 201 im Folgenden von der Vermittlungseinheit 107 ein Datenpaket erhält, das einem Endgerät 104, 105 zuordenbar ist, das als freigeschaltetes Endgerät 104, 105 in dem Gatewayserver 201 registriert ist, dann wird das Datenpaket in das Datennetzwerk 103 weitergeleitet. Falls ein Datenpaket, das von der Vermittlungseinheit 107 an den Gatewayserver 201 weitergeleitet worden ist, keinem freigeschalteten Endgerät 104, 105 zugeordnet werden kann, dann wird es in der zuvor beschriebenen Weise an den Portalserver 202 weitergeleitet, um die Freischaltung einer Datenverbindung in das Datennetzwerk 103 zu ermöglichen.

In dem Datennetzwerk 103 abgesendete Datenpakete, die in dem Gatewayserver 201 empfangen werden, werden in einer Ausgestaltung ohne Filterung weitergeleitet, so dass sie über das HPLMN 101 dem vorgesehenen Empfänger zugestellt werden können. Derartige Datenpakete werden jedoch in der Regel lediglich aufgrund einer vorherigen Anforderung übermittelt, die nur dann über das HPLMN 101 in das Datennetzwerk 103 weitergeleitet wird, wenn die Datenverbindung in das Datennetzwerk 103 für den Absender der Anforderung freigeschaltet ist. Daher ist eine Filterung von aus dem Datennetzwerk 103 stammenden Datenpaketen in der Regel nicht erforderlich, um eine unberechtigte Nutzung einer Datenverbindung in das Datennetzwerk 103 zu verhindern.

Gleichfalls kann es jedoch auch vorgesehen sein, dass aus dem Datennetzwerk 103 stammende Datenpakete, die in dem Gatewayserver 201 empfangen werden, nur dann weitergeleitet werden, wenn sie an ein freigeschaltetes Endgerät 104, 105 adressiert sind. Um dabei auch in der zuvor beschriebenen Weise einen unentgeltlichen Zugriff auf vorgegebene Server des Datennetzwerks 103 zu ermöglichen, werden Datenpakete, die von diesen Servern stammen, auch dann von dem Gatewayserver 201 weitergeleitet, wenn sie nicht an ein freigeschaltetes Endgerät 104, 105 adressiert sind.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Freischalten einer paketvermittelnden Datenverbindung von einem mobilen Endgerät (104; 105) über ein Mobilfunknetzwerk (101; 102) in ein Datennetzwerk (103), wobei dem Endgerät (104; 105) ein Heimatnetzwerk (101) zugeordnet ist, umfassend die folgenden Schritte:
- Empfangen einer Anforderung der Datenverbindung von dem Endgerät (104; 105) in einer Vermittlungseinheit (106; 111) des Mobilfunknetzwerks (101; 102);
- Weiterleiten der Anforderung von der Vermittlungseinheit (106; 111) an eine Gatewayeinrichtung (108) des Heimatnetzwerks (101), **dadurch gekennzeichnet, dass** die Freischaltungsbedingungen in der Gatewayeinrichtung (108) auf der Grundlage einer Zuordnung zwischen einem der Vermittlungseinheit (106; 111) zugeordneten Merkmal und dem Mobilfunknetzwerk (101; 102) bestimmt und für eine Freischaltung der Datenverbindung zur Anzeige auf dem mobilen Endgerät von der Gatewayeinrichtung (108) bereitgestellt werden.

2. Verfahren nach Anspruch 1, wobei dem Endgerät (104; 105) aufgrund der Weiterleitung der Anforderung an die Gatewayeinrichtung (108) eine IP-Adresse zugeordnet wird und die Freischaltungsbedingungen unter Verwendung der IP-Adresse an das Endgerät (104; 105) übermittelt werden.

3. Verfahren nach Anspruch 1 oder 2, bei dem die Anforderung über eine weitere Vermittlungseinheit (107) des dem Endgerät (104; 105) zugeordneten Heimatnetzwerks (101) an die Gatewayeinrichtung (108) weitergeleitet wird, wobei die weitere Vermittlungseinheit (107) dem Endgerät (104; 105) die IP-Adresse zuordnet.

4. Verfahren nach einem der vorangegangenen Ansprüche, bei dem die Anforderung-zu einem Portalsserver umgeleitet wird, wobei der Portalserver (202) eine die Freischaltungsbedingungen enthaltende Webseite an das Endgerät (104; 105) übermittelt.

5. Verfahren nach einem der vorangegangenen Ansprüche, bei dem die Freischaltungsbedingungen wenigstens eine Freischaltungsdauer und/oder eine Freischaltungsgebühr umfassen.

6. Verfahren nach einem der vorangegangenen Ansprüche, bei dem eine Freischaltung der Datenverbindung aufgrund einer mittels des Endgeräts (104; 105) vorgenommenen Bestätigung einer Freischaltungsdauer und/oder einer Freischaltungsgebühr erfolgt.

7. Verfahren nach einem der vorangegangenen Ansprüche, bei dem die Datenverbindung von der Gatewayeinrichtung (108) aufgrund der Bestätigung der Freischaltungsdauer für eine der Freischaltungsdauer entsprechende Zeitdauer freigeschaltet wird.

8. Verfahren nach Anspruch 7, bei dem das Endgerät (104; 105) aufgrund der Freischaltung in der Gatewayeinrichtung (108) derart registriert wird, dass von dem Endgerät (104; 105) abgesendete Datenpakete in das Datennetzwerk (103) weitergeleitet werden.

9. Verfahren nach einem der vorangegangenen Ansprüche, bei dem die Freischaltung aufgrund einer Zahlungstransaktion bezüglich der Freischaltungsgebühr erfolgt.

10. Verfahren nach einem der vorangegangenen Ansprüche, wobei das der Vermittlungseinheit (106; 111) zugeordnete Merkmal eine IP-Adresse der Vermittlungseinheit (106; 111) umfasst.

11. Verfahren nach einem der vorangegangenen Ansprüche, wobei es sich bei dem weiteren Datennetzwerk (103) um das Internet handelt.

12. Verfahren nach einem der vorangegangenen Ansprüche, wobei es sich bei dem Mobilfunknetzwerk (101; 102) um das dem Endgerät (104; 105) zugeordnete Heimatnetzwerk (101) handelt oder um ein besuchtes Netzwerk (102), welches mit dem Heimatnetzwerk (101) verbunden ist.

13. Netzwerkknoten (108) zum Freischalten einer paketvermittelnden Datenverbindung von einem mobilen Endgerät (104; 105) über wenigstens ein Mobilfunknetzwerk (101; 102) in ein Datennetzwerk (103), wobei der Netzwerkknoten als Gatewayeinrichtung in einem Mobilfunknetz angeordnet ist, das dem Endgerät (104; 105) als ein Heimatnetzwerk (101) zugeordnet ist, und wobei der Netzwerkknoten folgendes umfasst:
- eine Schnittstelle, die dazu ausgestaltet ist, eine Anforderung der Datenverbindung von einer Vermittlungseinheit (106; 111) des Mobilfunknetzwerks (101; 102) zu empfangen; **dadurch gekennzeichnet, dass** der Netzwerkknoten eine Einrichtung umfasst, die dazu ausgestaltet ist, die Freischaltungsbedingungen auf der Grundlage einer Zuordnung zwischen einem der Vermittlungseinheit (106; 111) zugeordneten Merkmal und dem Mobilfunknetzwerk (101; 102) zu bestimmen und dass der Netzwerkknoten eine Servereinrichtung umfasst, die dazu ausgestaltet ist, die bestimmten Freischaltungsbedingungen der Datenverbindung zur Anzeige an dem mobilen Endgerät (104;105) bereitzustellen.

14. Netzwerksystem umfassend einen Netzwerkknoten nach Anspruch 13 und eine Vermittlungseinheit (106; 111) eines Mobilfunknetzwerks (101; 102), wobei die Vermittlungseinheit (106; 111) dazu ausgestaltet ist, die Anforderung für den Datenverbindungsaufbau von dem Endgerät (104; 105) entgegenzunehmen und an den Netzwerkknoten weiterzuleiten.

## Claims

1. Method for approving a package-transmitting data connection from a mobile terminal (104; 105) via a mobile network (101; 102) in a data network (103), wherein a home network (101) is allocated to the terminal (104;105), comprising the following steps:
- Receiving a request of data connection from the terminal (104; 105) in a broker unit (106; 111) of the mobile radio network (101; 102);
- Forwarding the request from the broker unit (106; 111) to a gateway device (108) of the home network (101),
**characterized in that** the approval conditions in the gateway device (108) are determined on the basis of an allocation between a feature allocated to the broker unit (106; 111) and the mobile radio network (101; 102) and are provided by the gateway device (108) for approval of the data connection for displaying on the mobile terminal.

2. Method according to claim 1, wherein on the basis of the forwarding of the request to the gateway device (108) an IP address is allocated to the terminal (104; 105) and the approval conditions are transmitted to the terminal (104; 105) using the IP address.

3. Method according to claim 1 or 2, in which the request is transmitted via a further broker unit (107) of the home network (101) allocated to the terminal (104; 105) to the gateway device (108), wherein the further broker unit (107) allocates the IP address to the terminal (104;105).

4. Method according to one of the preceding claims, in which the request is redirected to a portal server, wherein the portal server (202) transmits a website containing the approval conditions to the terminal (104; 105).

5. Method according to one of the preceding claims, in which the approval conditions include at least an approval duration and/or an approval fee.

6. Method according to one of the preceding claims, in which an approval of the data connection is effected on the basis of a confirmation, performed via the terminal (104; 105), of an approval duration and/or an approval fee.

7. Method according to one of the preceding claims, in which the data connection from the gateway device (108) is approved due to the confirmation of the approval duration for a time period corresponding to the approval duration.

8. Method according to claim 7, in which on the basis of the approval in the gateway device (108) the terminal (104; 105) is registered in such a manner, that data packages sent from the terminal (104;105) are forwarded to the data network (103).

9. Method according to one of the preceding claims, in which the approval occurs on the basis of a payment transaction regarding the approval fee.

10. Method according to one the preceding claims, wherein the feature allocated to the transmission unit (106; 111) includes an IP address of the broker unit (106; 111).

11. Method according to one of the preceding claims, wherein the further data network (103) is the Internet.

12. Method according to one the preceding claims, wherein the mobile radio network (101; 102) is the home network (101) allocated to the terminal (104; 105) or a visited network (102), which is connected to the home network (101).

13. Network node (108) for the approval of a package-transmitting data connection of a mobile terminal (104; 105) via at least a mobile radio network (101; 102) in a data network (103), wherein the network node is arranged as a gateway device in a mobile radio network, which is allocated to the terminal (104; 105) as a home network (101), and wherein the network node includes the following:
- an interface, which is configured to receive a request of the data connection from a broker unit (106; 111) of the mobile radio network (101; 102);
**characterized in that** the network node comprises a device, which is configured to determine the approval conditions on the basis of an allocation between a feature allocated to the broker unit (106; 111) and the mobile radio network (101; 102), and **in that** the network node comprises a server device, which is configured to provide the determined approval conditions of the data connection for displaying on the mobile terminal (104; 105).

14. Network system comprising a network node according to claim 13 and a broker unit (106; 111) of a mobile radio network (101;102), wherein the broker unit (106; 111) is configured to receive the request for the data connection establishment from the terminal (104; 105), and to forward it to the network node.

## Revendications

1. Procédé d'activation d'une liaison de données à commutation de paquets d'un terminal mobile (104 ; 105) dans un réseau de données (103) par l'intermédiaire d'un réseau radio mobile (101 ; 102), un réseau domestique (101) étant affecté au terminal (104 ; 105), comprenant les étapes suivantes :
- réception dans une unité de commutation (106 ; 11) du réseau radio mobile (101 ; 102) d'une demande de la liaison de données par le terminal (104 ; 105) ;
- acheminement de la demande de l'unité de commutation (106 ; 11) à un dispositif passerelle (108) du réseau domestique (101),
**caractérisé en ce que** les conditions d'activation dans le dispositif passerelle (108) sont déterminées sur la base d'une attribution entre une caractéristique affectée à l'unité de commutation (106 ; 111) et le réseau radio mobile (101 ; 102) et sont fournies par le dispositif passerelle (108) pour une activation de la liaison de donnés pour l'affichage sur le terminal mobile du dispositif passerelle (108).

2. Procédé selon la revendication 1, une adresse IP étant attribuée au terminal (104 ; 105) en raison de l'acheminement de la demande au dispositif passerelle (108), et les conditions d'activation étant transmises au terminal (104 ; 105) en utilisant l'adresse IP.

3. Procédé selon la revendication 1 ou 2, dans lequel la demande est transmise au dispositif passerelle (108) par l'intermédiaire d'une unité de commutation supplémentaire (107) du réseau domestique (101) affecté au terminal (104 ; 105), l'unité de commutation supplémentaire (107) attribuant l'adresse IP au terminal (104 ; 105).

4. Procédé selon l'une quelconque des revendications précédentes, dans lequel la demande est déviée vers un serveur portail, le serveur portail (202) transmettant au terminal (104 ; 105) un site internet contenant les conditions d'activation.

5. Procédé selon l'une quelconque des revendications précédentes, dans lequel les conditions d'activation de la liaison de données comprennent au moins une durée d'activation et/ou une taxe d'activation.

6. Procédé selon l'une quelconque des revendications précédentes, dans lequel une activation de la liaison de données est réalisée en raison d'une confirmation, effectuée au moyen du terminal (104 ; 105), d'une durée d'activation et/ou d'une taxe d'activation.

7. Procédé selon l'une quelconque des revendications précédentes, dans lequel la liaison de données est activée par le dispositif passerelle (108) en raison de la confirmation de la durée d'activation pour une durée correspondant à la durée d'activation.

8. Procédé selon la revendication 7, dans lequel le terminal (104 ; 105), en raison de l'activation dans le dispositif passerelle (108), est enregistré de manière à ce que les paquets de données émis par le terminal (104 ; 105) soient acheminés dans le réseau de données (103).

9. Procédé selon l'une quelconque des revendications précédentes, dans lequel l'activation est réalisée en raison d'une transaction de paiement concernant la taxe d'activation.

10. Procédé selon l'une quelconque des revendications précédentes, la caractéristique affectée à l'unité de commutation (106 ; 111) comprenant une adresse IP de l'unité de commutation (106 ; 111).

11. Procédé selon l'une quelconque des revendications précédentes, le réseau de données supplémentaire (103) étant Internet.

12. Procédé selon l'une quelconque des revendications précédentes, le réseau radio mobile (101 ; 102) étant le réseau domestique (101) affecté au terminal (104 ; 105) ou un réseau visité (102), lequel est relié au réseau domestique (101).

13. Noeud de réseau (108) destiné à l'activation d'une liaison de données à commutation de paquets d'un terminal mobile (104 ; 105) dans un réseau de données (103) par l'intermédiaire d'au moins un réseau radio mobile (101 ; 102), le noeud de réseau étant disposé dans un réseau radio mobile en tant que dispositif passerelle, lequel réseau radio mobile est affecté au terminal (104 ; 105) en tant qu'un réseau domestique (101), et le noeud de réseau comprenant ce qui suit :
- une interface qui est conçue pour recevoir une demande de la liaison de données d'une unité de commutation (106 ; 111) du réseau radio mobile (101 ; 102) ;
**caractérisé en ce que** le noeud de réseau comprend un dispositif qui est conçu pour déterminer les conditions d'activation sur la base d'une attribution entre une caractéristique affectée à l'unité de commutation (106 ; 111) et le réseau radio mobile (101 ; 102), et **en ce que** le noeud de réseau comprend un dispositif serveur qui est conçu pour fournir les conditions d'activation déterminées de la liaison de données pour l'affichage sur le terminal (104 ; 105).

14. Système de réseau comprenant un noeud de réseau selon la revendication 13 et une unité de commutation (106 ; 111) d'un réseau radio mobile (101 ; 102), l'unité de commutation (106 ; 111) étant conçue pour recevoir la demande pour l'établissement de la liaison de données du terminal (104 ; 105) et pour l'acheminer au noeud de réseau.
